# EUROPEAN PATENT SPECIFICATION

(11) **EP 1 576 614 B1**
(45) Date of publication and mention of the grant of the patent: **10.03.2010**
(21) Application number: 03780430.9
(22) Date of filing: 16.12.2003
(51) Int. Cl.: G11C 11/16, G11C 8/20, G06K 19/073, G11C 7/24

(54) **TAMPER-RESISTANT PACKAGING AND APPROACH**
BETRUGSSICHERE VERPACKUNG
EMBALLAGE INVIOLABLE ET PROCEDE CORRESPONDANT

(30) Priority: 18.12.2002 US 434829 P
(43) Date of publication of application: 21.09.2005
(73) Proprietor: NXP B.V., 5656 AG Eindhoven (NL)
(72) Inventor: KNUDSEN, Carl, San Jose, CA 95131 (US)
(74) Representative: Williamson, Paul Lewis
(86) International application number: PCT/IB2003/006010
(87) International publication number: WO 2004/055918

(56) References cited:
- US-A1- 2001 033 012
- US-A1- 2002 008 988
- PATENT ABSTRACTS OF JAPAN vol. 008, no. 278 (P-322), 19 December 1984 (1984-12-19) & JP 59 144094 A (HITACHI SEISAKUSHO KK), 17 August 1984 (1984-08-17)
- PATENT ABSTRACTS OF JAPAN vol. 009, no. 093 (P-351), 23 April 1985 (1985-04-23) & JP 59 221631 A (FUJITSU KK), 13 December 1984 (1984-12-13)

## Description

The present invention is directed to device packaging and, more particularly, to tamper-resistant packaging for items such as integrated circuits.

Packaging plays an important role in product protection and security. For instance, in electronics and software applications, packaging is important for ensuring that products are kept free from damage and are not tampered with. Tamper-prevention has been particularly important in applications where information stored within a particular package is proprietary. For example, in memory applications, it is sometimes desirable to prevent access to data stored in a circuit.

A variety of approaches to protecting stored data have been used. For example, in SRAM applications, memory is lost when power is removed from the circuitry used to store data. Power is removed when tampering is detected, thus erasing the stored data. When these approaches involve battery backup, the battery power is also removed in response to tampering.

In other memory applications, power is not necessarily required for storing data. For example, in magnetic memory applications, memory is stored in a manner that does not require power to maintain the memory and thus is non-volatile. Certain types of magnetic memory cells that use the magnetic state of a region for altering the electrical resistance of materials located near the region are collectively known as magnetoresistive (MR) memory cells. An array of magnetic memory cells is often called a magnetic random access memory (MRAM). In MRAM applications, memory cells are typically formed on intersections of word lines and sense lines, with each memory cell typically having magnetic layers separated by a conductive or insulating layer. Magnetoresistive metals used in such memory applications show a change in electrical resistance when placed in a magnetic field. In this regard, the MRAM cell has two stable magnetic configurations, one having high resistance and the other low resistance (*e.g.*, with high resistance representing a logic state zero and low resistance representing a logic state one). The magnetic state (*i.e.*, magnetic charge) of the device is manipulated and read as data, such that the read can be effected using an instrument to probe an integrated circuit on which the MRAM cell is located.

Protecting memory in applications relying on power to maintain memory, as well as those applications that do not necessarily require power to maintain memory *(i.e.,* non-volatile memory), has been challenging. In particular, protecting non-volatile memory has been challenging because typical approaches involving power-related tamper protection do not work. Specifically, removing power does not cause memory loss. In addition, techniques previously used for protecting both non-volatile and volatile memory from probing tend to rely upon the detection of a probe via a disturbance in clock stream or a sudden increase in load capacitance. When non-conducting and/or non-contacting probing techniques are used, previously-available probe detection techniques have limited effect. These and other difficulties present challenges to the implementation of tamper-protection and packaging for a variety of applications.

US 2001/033012 discloses an integrated circuit device comprising a circuit which uses encryption and an encapsulation packaging layer in which the circuit is responsive to at least one physical parameter of the encapsulation to apply the encryption and/or decryption by reading the key therefrom, so that tampering with the encapsulation to gain access to the circuit causes the encryption and/or decryption to fail.

JP 59144094 addresses the problem of protecting the stored information from a disturbance magnetic field and to improve the reliability of a memory device by providing a magnetic body to the outer surface of a magnetic bubble memory device.

Various aspects of the present invention involve tamper protection for a variety of integrated circuits, such as memory circuits and others. The present invention is exemplified in a number of implementations and applications, some of which are summarized below.

According to one example embodiment, an integrated circuit arrangement includes an integrated circuit device, which has a plurality of magnetically-responsive circuit nodes. The integrated circuit arrangement also comprises a package including a plurality of magnetized particles, where the package is adapted to inhibit access to the integrated circuit device. The magnetically-responsive circuit nodes magnetically respond to the plurality of magnetized particles such that a change in the magnetic field collectively provided by the magnetized particles renders a change in a magnetic state of at least one of the magnetically-responsive circuit nodes. The integrated circuit arrangement also includes a detection circuit adapted to detect the magnetic state of the magnetically-responsive circuit nodes and, in response to a change in the magnetic state, to detect that the package has been tampered with. The detection circuit includes a comparison circuit adapted to compare the detected magnetic state with a reference state and to detect tampering with the package in response to the detected magnetic state being different than the reference state.

The above summary of the present invention is not intended to describe each embodiment or every implementation of the present invention. The above summary of the present invention is not intended to describe each illustrated embodiment or every implementation of the present invention. The figures and detailed description that follow more particularly exemplify these embodiments.

The invention may be more completely understood in consideration of the following detailed description of various embodiments of the invention in connection with the accompanying drawings, in which:
FIG. 1 is an integrated circuit arrangement including a package and integrated circuit device arranged for inhibiting the tampering of circuitry in the device, according to an example embodiment of the present invention; and
FIG. 2 is a flow diagram for a tamper protection approach, according to another example embodiment of the present invention.

While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all modifications, equivalents, and alternatives falling within the scope of the invention as defined by the appended claims.

The present invention is believed to be applicable to a variety of circuits and approaches involving and/or benefiting from tamper protection, and in particular to the detection of tampering of a packaged integrated circuit without necessarily relying upon power or interruption and/or the detection of an electrical characteristic. While the present invention is not necessarily limited to such applications, an appreciation of various aspects of the invention is best gained through a discussion of examples in such an environment.

According to an example embodiment of the present invention, a tamper-protection arrangement includes a package arranged to cover at least a portion of an integrated circuit chip where the chip contains at least one magnetically-responsive element. The package is also arranged to prevent access to at least a portion of the integrated circuit chip. The package includes a plurality of magnetic particles which are arranged to cause a detectable magnetic response in at least one magnetically-responsive element. The tamper-protection arrangement further includes a tamper-protection circuit which is adapted to detect the magnetic response of at least one magnetically-responsive element and to detect a change in the magnetic field provided by the magnetic particles. Such a change could be the result of various events some examples being: a probe being positioned near the package, the existence of another magnetic field near the package, or the removal or partial removal of the package from the arrangement. Such a change in the magnetic field would indicate that the circuit arrangement was tampered with.

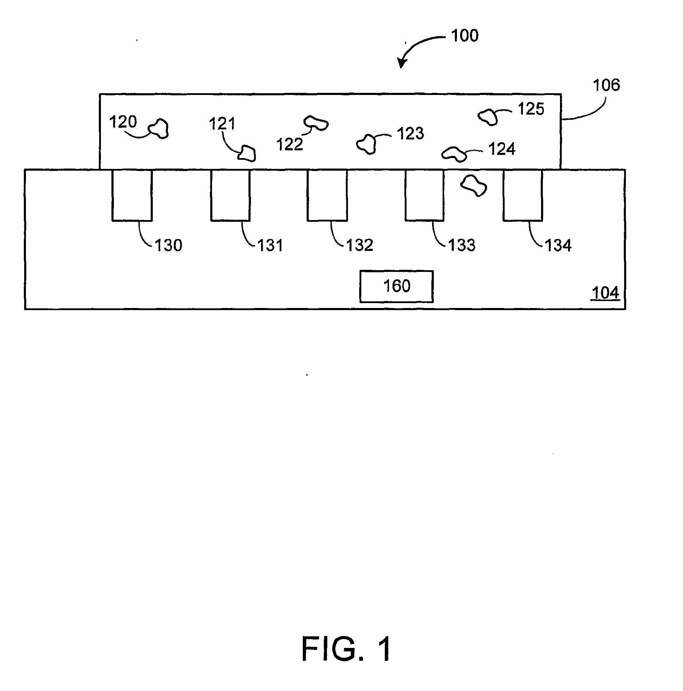

FIG. 1 shows an integrated circuit device 100 having a substrate 104 having circuitry 108 therein and further covered by a package 106 adapted for inhibiting tampering, according to another example embodiment of the present invention. The substrate 104 includes circuitry and a plurality of magnetically-responsive circuit elements 130-134 (*e.g*., MRAM elements, magnetic junction transistors or magnetic tunnel junction elements). The package 106 has magnetic particles 120-125 in various portions thereof, with at least some of the magnetic particles arranged to cause one or more of the magnetically-responsive circuit elements 130-134 to take on a magnetic state (*e.g*., a polarization direction). For example, the magnetic particle 124 causes the magnetically-responsive circuit element 133 to take on a selected magnetic state.

With the package 106 in place, the state of at least some of the plurality of magnetically-responsive circuit elements 130-134 is detected and stored as a reference that represents an untampered condition. During operation (*e.g*., during power-up) of the integrated circuit device 100, the stored reference is compared with real-time states of the magnetically-responsive circuit elements 130-134. If a portion of the package 106 including a magnetic particle has been tampered with (*e.g*., removed), the real-time state of one or more of the magnetically-responsive circuit elements 130-134 is correspondingly altered. For instance, referring again to magnetically-responsive circuit element 133, when a portion of the package 106 including the magnetic particle 124 is removed, the state of the magnetically-responsive element 133 is no longer influenced by the magnetic particle 124. Without the influence of the magnetic particle 124, the magnetically-responsive element 133 is free to take on a state relative to other magnetic fields present. With this approach, access to the circuitry for probing, visual inspection and/or other purposes is detected.

In a further example embodiment, the integrated circuit device 100 includes a tamper-detection circuit 160 adapted to detect and respond to tampering detected as a function of the state of one or more of the magnetically-responsive circuit elements 130-134. In one implementation, the tamper-detection circuit includes a memory adapted to store data representative of an untampered state of the magnetically-responsive circuit elements 130-134. During subsequent operation of the integrated circuit device 100, a real-time state of the magnetically-responsive circuit elements 130-134 is detected and compared at the tamper-detection circuit 160 with the stored untampered state. If the real-time detected state matches the stored untampered state, a condition representing no tampering is detected. However, if the real-time detected state does not match the stored untampered state, a tamper condition is detected as the change in position and/or removal of one or more of the magnetic particles 120-125.

In another implementation, the tamper-detection circuit 160 is adapted to respond to a tamper condition by altering a characteristic of the integrated circuit device 100. For instance, when the circuitry includes memory, the tamper-detection circuit 160 is adapted to erase some or all of the memory. In another instance, the tamper-detection circuit is adapted to set a flag representing the detection of tampering. The flag can then be detected by another user, for instance, upon visual or electronic detection, either locally with the integrated circuit device 100 or remotely, such as via the Internet (*e.g*., wherein the integrated circuit device 100 is connected to the Internet).

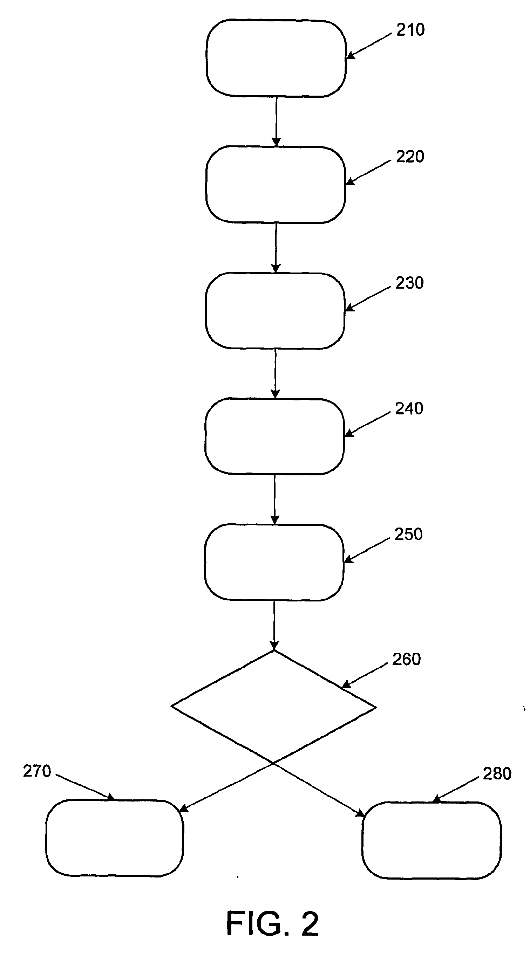

Referring now to FIG. 2, one particular approach to tamper-detection involves storing a reference signal representative of a logical state of selected magnetically-responsive memory cells and using the reference signal as a comparison, according to another example embodiment of the present invention. At block 210, a package is formed over an integrated circuit device having magnetically-responsive memory cells therein. The package includes a plurality of magnets, with the magnets arranged to affect the logical state of some of the magnetically-responsive memory cells. After the package is in place, the state of at least some of the magnetically-responsive memory cells is detected at block 220. The state is stored as a reference in a memory, such as a one-time programmable ROM, at block 230.

During operation of the integrated circuit chip, the state of the magnetically-responsive memory cells is detected at block 240. At block 250, the state detected at block 240 is compared with the reference state detected at block 220 and stored at block 230. When the states match at block 260, a condition of no tampering is detected at block 270. When the states do not match at block 260, a tamper condition is detected at block 280. In further implementations, the tamper condition detected at block 280 is used to effect a response to the tampering, such as by erasing memory or setting a tamper-detection flag.

The various embodiments described above and shown in the figures are provided by way of illustration only and should not be construed to limit the invention. Based on the above discussion and illustrations, those skilled in the art will readily recognize that various modifications and changes may be made to the present invention without strictly following the exemplary embodiments and applications illustrated and described herein.

## Claims

1. An integrated circuit arrangement comprising:
an integrated circuit device (100) having a plurality of magnetically-responsive circuit nodes (130-134) ;
a package (106) adapted to inhibit access to the integrated circuit device (100) and including a plurality of magnetized particles (120-125) therein, the magnetically-responsive circuit nodes (130-134) magnetically responding to the plurality of magnetized particles (120-125) such that a change in magnetic field collectively provided by the magnetized particles (120-125) renders a change in a magnetic state of at least one of the magnetically-responsive circuit nodes (130-134); and
a detection circuit (160) adapted to detect the magnetic state of the magnetically-responsive circuit nodes (130-134) and, in response to a change in the magnetic state, to detect that the package (106) has been tampered with; **characterized in that**:
the detection circuit (160) includes a comparison circuit adapted to compare the detected magnetic state with a reference state and to detect tampering with the package (106) in response to the detected magnetic state being different than the reference state.

2. The integrated circuit arrangement of claim 1, further comprising a memory adapted to store data representative of an untampered magnetic state of the magnetically- responsive circuit nodes (130-134), wherein the comparison circuit is adapted to compare the data stored in the memory with the detected magnetic state and to detect tampering with the package (106) in response to the data stored in the memory indicating a different magnetic state than the detected magnetic state.

3. The integrated circuit arrangement of claim 2, wherein the memory includes a one-time programmable ROM.

4. The integrated circuit arrangement of claim 1, wherein the integrated circuit device (100) is adapted to alter data stored in the integrated circuit in response to the comparison circuit detecting tampering with the package (106).

5. The integrated circuit arrangement of claim 1, wherein the integrated circuit device (100) is adapted to set a tamper-detection flag in response to the comparison circuit detecting tampering.

6. The integrated circuit arrangement of claim1, wherein the magnetically-responsive circuit nodes (130-134) change in magnetic state in response to a sufficient amount of the package (106) being removed to allow probing access to the integrated circuit device (100).

7. The integrated circuit arrangement of claim1, wherein the magnetically-responsive circuit nodes (130-134) change in magnetic state in response to a sufficient amount of the package (106) being removed to expose a circuit element in the integrated circuit.

8. The integrated circuit arrangement of claim 1, wherein removal of a portion of the package (106) sufficient to allow imaging access to the integrated circuit device (100) renders the change in a magnetic state of the magnetically-responsive circuit nodes (130-134).

9. The integrated circuit arrangement of claim1, wherein removal of a portion of the package (106) sufficient to allow electrical access to the integrated circuit device (100) renders the change in a magnetic state of the magnetically-responsive circuit nodes (130-134).

10. The integrated circuit arrangement of claim 1, wherein the package (106) covers a substantial portion of the integrated circuit device (100), wherein the plurality of magnetized particles (120-125) are distributed throughout the package (106) and wherein removal of a portion of the package (106) sufficient to allow access to the integrated circuit device (100) renders the change in a magnetic state of the magnetically-responsive circuit nodes (130-134).

11. The integrated circuit arrangement of claim 1, wherein each magnetically-responsive circuit node includes a circuit element that resistively responds to a magnetic field generated by the magnetized particles.

12. The integrated circuit arrangement of claim 1, wherein each magnetically-responsive circuit node includes: a mini magnet susceptible to a change in magnetic state as a function of a magnetic field from the magnetized particles; and a circuit element that resistively responds to a magnetic state of the mini magnet, wherein the mini magnet of the at least one of the magnetically-responsive circuit nodes (130-134) changes state in response to the change in magnetic field collectively provided by the magnetized particles.

13. A method for protecting an integrated circuit device (100) from tampering, the method comprising:
enclosing said device in a package (106) adapted to inhibit access to the integrated circuit device (100) and including a plurality of magnetized particles (120-125) therein, the magnetically-responsive circuit nodes (130-134) magnetically responding to the plurality of magnetized particles (120-125) such that a change in magnetic field collectively provided by the magnetized particles (120-125) renders a change in a magnetic state of at least one of the magnetically-responsive circuit nodes (130-134);
detecting a magnetic state of a plurality of magnetically-responsive circuit nodes (130-134) in the integrated circuit device (100); and in response to detecting a change in the magnetic state of the plurality of magnetically-responsive circuit nodes (130-134), detecting that the integrated circuit device (100) has been tampered with;
**characterized in that** the method further comprises the step of:
comparing the detected magnetic state with a reference state and detecting tampering with the package (106) in response to the detected magnetic state being different than the reference state

14. The method of claim 13, wherein detecting a magnetic state of a plurality of magnetically-responsive circuit nodes (130-134) includes monitoring the magnetic state of the plurality of magnetically-responsive circuit nodes (130-134).

## Patentansprüche

1. Integrierte Schaltungsanordnung, umfassend:
eine integrierte Schaltungsvorrichtung (100), die eine Vielzahl magnetisch ansprechender Schaltungsknoten (130-134) aufweist;
ein Gehäuse (106), dass so ausgeführt ist, dass es den Zugriff auf die integrierte Schaltungsvorrichtung (100) unterbindet und eine Vielzahl magnetisierter Partikel (120-125) enthält, wobei die magnetisch ansprechenden Schaltungsknoten (130, 134) auf die Vielzahl magnetisierter Partikel (120-125) magnetisch anspricht, so dass eine Änderung des Magnetfeldes, das gemeinsam von den magnetisierten Partikeln (120-125) bereitgestellt wird, eine Änderung eines magnetischen Zustands wenigstens eines der magnetisch ansprechenden Schaltungsknoten (130-134) bewirkt; und
eine Erfassungsschaltung (160), die so ausgeführt ist, dass sie den magnetischen Zustand der magnetisch ansprechenden Schaltungsknoten (130-134) erfasst und in Reaktion auf eine Änderung des magnetischen Zustands feststellt, dass das Gehäuse (106) manipuliert worden ist;
**dadurch gekennzeichnet, dass**:
die Erfassungsschaltung (160) eine Vergleichsschaltung enthält, die so ausgeführt ist, dass sie den erfassten magnetischen Zustand mit einem Referenzzustand vergleicht und in Reaktion darauf, dass der erfasste magnetische Zustand verschieden vom Referenzzustand ist, eine Manipulation des Gehäuses (106) feststellt.

2. Integrierte Schaltungsanordnung nach Anspruch 1, die ferner einen Speicher umfasst, der so ausgeführt ist, dass er Daten speichert, die einen unmanipulierten magnetischen Zustand der magnetisch ansprechenden Schaltungsknoten (130-134) repräsentieren, wobei die Vergleichsschaltung so ausgeführt ist, dass sie die im Speicher gespeicherten Daten mit dem erfassten magnetischen Zustand vergleicht und in Reaktion darauf, dass die im Speicher gespeicherten Daten einen anderen magnetischen Zustand anzeigen als den erfassten magnetischen Zustand, eine Manipulation des Gehäuses (106) feststellt.

3. Integrierte Schaltungsanordnung nach Anspruch 2, wobei der Speicher einen einmalig programmierbaren ROM enthält.

4. Integrierte Schaltungsanordnung nach Anspruch 1, wobei die integrierte Schaltungsvorrichtung (100) so ausgeführt ist, dass sie die in der integrierten Schaltung gespeicherten Daten in Reaktion darauf, dass die Vergleichsschaltung eine Manipulation des Gehäuses (106) feststellt, ändert.

5. Integrierte Schaltungsanordnung nach Anspruch 1, wobei die integrierte Schaltungsvorrichtung (100) so ausgeführt ist, dass sie in Reaktion auf das Feststellen einer Manipulation durch die Vergleichsschaltung ein Manipulationsfeststellungskennzeichen setzt.

6. Integrierte Schaltungsanordnung nach Anspruch 1, wobei sich die magnetisch ansprechenden Schaltungsknoten (130-134) im magnetischen Zustand in Reaktion darauf ändern, dass eine ausreichende Menge des Gehäuses (106) entfernt wird, um einen Prüfzugriff auf die integrierte Schaltungsvorrichtung (100) zu erlauben.

7. Integrierte Schaltungsanordnung nach Anspruch 1, wobei die magnetisch ansprechenden Schaltungsknoten (130-134) sich im magnetischen Zustand in Reaktion darauf ändern, dass eine ausreichende Menge des Gehäuses (106) entfernt wird, um ein Schaltungselement in der integrierten Schaltung freizulegen.

8. Integrierte Schaltungsanordnung nach Anspruch 1, wobei das Entfernen eines Teils des Gehäuses (106), das ausreicht, um einen Abbildungszugriff auf die integrierte Schaltungsvorrichtung (100) zu erlauben, eine Änderung eines magnetischen Zustands der magnetisch ansprechenden Schaltungsknoten (130-134) bewirkt.

9. Integrierte Schaltungsanordnung nach Anspruch 1, wobei das Entfernen eines Teils des Gehäuses (106), das ausreicht, um einen elektrischen Zugriff auf die integrierte Schaltungsvorrichtung (100) zu erlauben, eine Änderung eines magnetischen Zustands der magnetisch ansprechenden Schaltungsknoten (130-134) bewirkt.

10. Integrierte Schaltungsanordnung nach Anspruch 1, wobei das Gehäuse (106) einen wesentlichen Teil der integrierten Schaltungsvorrichtung (100) abdeckt, wobei die Vielzahl der magnetischen Partikel (120-125) über das Gehäuse (106) verteilt ist, und wobei das Entfernen eines Teils des Gehäuses (106), das ausreicht, um einen Zugriff auf die integrierte Schaltungsvorrichtung (100) zu erlauben, eine Änderung eines magnetischen Zustands der magnetisch ansprechenden Schaltungsknoten (130-134) bewirkt.

11. Integrierte Schaltungsanordnung nach Anspruch 1, wobei jeder magnetisch ansprechende Schaltungsknoten ein Schaltungselement enthält, das resistiv auf ein von den magnetischen Partikeln erzeugtes Magnetfeld anspricht.

12. Integrierte Schaltungsanordnung nach Anspruch 1, wobei jeder magnetisch ansprechende Schaltungsknoten enthält: einen Miniaturmagneten, der als Funktion eines Magnetfelds von den magnetisierten Partikeln einer Änderung des magnetischen Zustands unterliegt; und ein Schaltungselement, das resistiv auf einen magnetischen Zustand des Miniaturmagneten anspricht, wobei der Miniaturmagnet des wenigstens einen der magnetisch ansprechenden Schaltungsknoten (130-134) seinen Zustand in Reaktion auf die Änderung des Magnetfeldes, das gemeinsam von den magnetisierten Partikeln bereitgestellt wird, ändert.

13. Verfahren zum Schützen einer integrierten Schaltungsvorrichtung (100) vor Manipulation, wobei das Verfahren umfasst:
Kapseln der Vorrichtung in einem Gehäuse (106), das so ausgeführt ist, dass es den Zugriff auf die integrierte Schaltungsvorrichtung (100) verhindert, und das eine Vielzahl magnetisierter Partikel (120-125) enthält, wobei magnetisch ansprechende Schaltungsknoten (130-134) auf die Vielzahl der magnetisierten Partikel (120-125) magnetisch ansprechen, so dass eine Änderung des Magnetfelds, das von den Partikeln (120-125) gemeinsam erzeugt wird, eine Änderung eines magnetischen Zustands wenigstens eines der magnetisch ansprechenden Schaltungsknoten (130-134) bewirkt;
Erfassen eines magnetischen Zustands einer Vielzahl von magnetisch ansprechenden Schaltungsknoten (130-134) in der integrierten Schaltungsvorrichtung (100); und in Reaktion auf das Erfassen einer Änderung des magnetischen Zustands der Vielzahl der magnetisch ansprechenden Schaltungsknoten (130-134), feststellen, dass die integrierte Schaltungsvorrichtung (100) manipuliert worden ist; **dadurch gekennzeichnet, dass** das Verfahren ferner den Schritt umfasst:
Vergleichen des erfassten magnetischen Zustands mit einem Referenzzustand und Feststellen einer Manipulation des Gehäuses (106) in Reaktion darauf, dass der erfasste magnetische Zustand verschieden vom Referenzzustand ist.

14. Verfahren nach Anspruch 13, wobei das Erfassen eines magnetischen Zustands einer Vielzahl von magnetisch ansprechenden Schaltungsknoten (130-134) das Überwachen des magnetischen Zustands der Vielzahl der magnetisch ansprechenden Schaltungsknoten (130-134) enthält.

## Revendications

1. Agencement de circuit intégré comprenant :
un dispositif à circuit intégré (100) comportant une pluralité de noeuds de circuit magnétiquement sensibles (130-134) ;
un emballage (106) adapté pour empêcher l'accès au dispositif à circuit intégré (100) et contenant en lui une pluralité de particules aimantées (120-125), les noeuds de circuit sensibles magnétiquement (130-134) fournissant une réponse magnétique à la pluralité de particules aimantées (120-125) de telle sorte qu'une variation du champ magnétique fourni collectivement par les particules aimantées (120-125) produise une variation de l'état magnétique d'au moins l'un des noeuds de circuit sensibles magnétiquement (130-134) ; et
un circuit de détection (160) adapté pour détecter l'état magnétique des noeuds de circuit sensibles magnétiquement (130-134) et, en réponse à un changement de l'état magnétique, pour détecter que l'emballage (106) a été violé ;
**caractérisé en ce que**
le circuit de détection (160) comprend un circuit de comparaison adapté pour comparer l'état magnétique détecté avec un état de référence et pour détecter une violation de l'emballage (106) en réponse à l'état magnétique détecté qui est différent de l'état de référence.

2. Agencement de circuit intégré selon la revendication 1, comprenant, de plus, une mémoire adaptée pour stocker des données représentatives d'un état magnétique inviolé des noeuds de circuit sensibles magnétiquement (130-134), dans lequel le circuit de comparaison est adapté pour comparer les données stockées dans la mémoire avec l'état magnétique détecté et pour détecter une violation de l'emballage (106) en réponse aux données stockées dans la mémoire indiquant un état magnétique différent de l'état magnétique détecté.

3. Agencement de circuit intégré selon la revendication 2, dans lequel la mémoire comporte une mémoire ROM programmable une seule fois.

4. Agencement de circuit intégré selon la revendication 1, dans lequel le dispositif à circuit intégré (100) est adapté pour modifier les données stockées dans le circuit intégré en réponse au circuit de comparaison détectant une violation de l'emballage (106).

5. Agencement de circuit intégré selon la revendication 1 dans lequel le dispositif à circuit intégré (100) est adapté pour établir un drapeau de détection de violation en réponse au circuit de comparaison détectant une violation.

6. Agencement de circuit intégré selon la revendication 1 dans lequel les noeuds de circuit sensibles magnétiquement (130-134) modifient leur état magnétique en réponse à une quantité suffisante de déplacement de l'emballage (106) afin de permettre à une sonde d'accéder au dispositif à circuit intégré (100).

7. Agencement de circuit intégré selon la revendication 1 dans lequel les noeuds de circuit sensibles magnétiquement (130-134) modifient leur état magnétique en réponse à une quantité suffisante de déplacement de l'emballage (106) afin d'exposer un élément de circuit appartenant au circuit intégré.

8. Agencement de circuit intégré selon la revendication 1 dans lequel le déplacement d'une partie de l'emballage (106) suffisant pour permettre un accès pour formation d'image au dispositif à circuit intégré (100) opère la modification de l'état magnétique des noeuds de circuit magnétiquement sensibles (130-134).

9. Agencement de circuit intégré selon la revendication 1 dans lequel le déplacement d'une partie de l'emballage (106) suffisant pour permettre un accès électrique au dispositif à circuit intégré (100) opère la modification de l'état magnétique des noeuds de circuit magnétiquement sensibles (130-134).

10. Agencement de circuit intégré selon la revendication 1 dans lequel l'emballage (106) couvre une partie importante du dispositif à circuit intégré (100), dans lequel la pluralité des particules aimantées (120-125) sont réparties à travers tout l'emballage (106) et dans lequel le déplacement d'une partie de l'emballage (106), suffisant pour permettre un accès au dispositif à circuit intégré (100), opère la modification de l'état magnétique des noeuds de circuit sensibles magnétiquement (130-134).

11. Agencement de circuit intégré selon la revendication 1 dans lequel chaque noeud de circuit sensible magnétiquement comporte un élément de circuit qui répond de façon résistive à un champ magnétique généré par les particules aimantées.

12. Agencement de circuit intégré selon la revendication 1 dans lequel chaque noeud de circuit sensible magnétiquement comporte : un mini-aimant susceptible d'apporter une modification de l'état magnétique en fonction d'un champ magnétique provenant des particules aimantées ; et un élément de circuit qui répond de façon résistive à un état magnétique du mini-aimant, dans lequel le mini-aimant d'au moins l'un des noeuds de circuit sensibles magnétiquement (130-134) modifie l'état en réponse au changement de champ magnétique fourni collectivement par les particules aimantées.

13. Procédé permettant de protéger un dispositif à circuit intégré (100) contre une violation, le procédé consistant à :
enfermer ledit dispositif dans un emballage (106) adapté pour empêcher l'accès au dispositif à circuit intégré (100) et contenant en lui une pluralité de particules aimantées (120-125), les noeuds de circuit sensibles magnétiquement (130-134) répondant magnétiquement à la pluralité de particules aimantées (120-125) de telle sorte qu'une variation du champ magnétique fourni collectivement par les particules aimantées (120-125) opère un changement de l'état magnétique d'au moins l'un des noeuds de circuit sensibles magnétiquement (130-134) ;
détecter un état magnétique d'une pluralité de noeuds de circuit sensibles magnétiquement (130-134) dans le dispositif à circuit intégré (100) ; et en réponse à la détection d'un changement de l'état magnétique de la pluralité de noeuds de circuit sensibles magnétiquement (130-134), détecter que le dispositif à circuit intégré (100) a été violé ;
**caractérisé en ce que** le procédé comprend, de plus, l'étape consistant à :
comparer l'état magnétique détecté à un état de référence et détecter une violation de l'emballage (106) en réponse à l'état magnétique détecté qui est différent de l'état de référence.

14. Procédé selon la revendication 13 dans lequel la détection d'un état magnétique d'une pluralité de noeuds de circuit sensibles magnétiquement (130-134) inclut de contrôler l'état magnétique de la pluralité des noeuds de circuit sensibles magnétiquement (130-134).
